# EUROPEAN PATENT SPECIFICATION

(11) **EP 3 773 002 B1**
(45) Date of publication and mention of the grant of the patent: **09.02.2022**
(21) Application number: 19724484.1
(22) Date of filing: 15.05.2019
(51) Int. Cl.: A23L 27/00, A23L 27/60

(54) **EMULSIFIED FOOD COMPOSITION**
EMULGIERTE LEBENSMITTELZUSAMMENSETZUNG
COMPOSITION ALIMENTAIRE ÉMULSIFIÉE

(30) Priority: 18.05.2018 EP 18173295
(43) Date of publication of application: 17.02.2021
(73) Proprietor: Unilever IP Holdings B.V., 3013 AL Rotterdam (NL)
(72) Inventor: NIEMAN, Gerrit, 3133 AT Vlaardingen (NL); SILVA PAES, Sabrina, 3133 AT Vlaardingen (NL); SCHUMM, Stephan, Georg, 3133 AT Vlaardingen (NL); VANDEVENNE, Evelien, Maria, Mathilda, 3133 AT Vlaardingen (NL)
(74) Representative: Fijnvandraat, Arnoldus
(86) International application number: PCT/EP2019/062523
(87) International publication number: WO 2019/219766

(56) References cited:
- EP-A1- 0 997 075
- EP-A1- 3 305 084
- EP-A1- 3 400 807
- EP-A1- 3 459 365
- EP-A2- 3 323 887
- WO-A1-95/17953
- WO-A1-2004/047562
- WO-A1-2011/077073
- WO-A1-2014/178139
- WO-A1-2018/050670
- WO-A1-2018/050673
- WO-A1-2018/083296
- WO-A1-2018/085323
- WO-A1-2018/095533
- WO-A1-2018/104093
- WO-A1-2018/108267
- WO-A1-2018/108438
- WO-A1-2018/112288
- WO-A1-2018/112479
- WO-A1-2018/114174
- WO-A1-2018/114175
- WO-A1-2018/122607
- WO-A1-2018/153614
- WO-A1-2018/154530
- WO-A1-2018/178059
- WO-A1-2018/206320
- WO-A1-2018/229524
- WO-A1-2018/234364
- WO-A1-2019/001689
- WO-A1-2019/005861
- WO-A1-2019/057407
- WO-A1-2019/114967
- WO-A1-2019/132959
- WO-A2-2018/096092
- MUSCHIOLIK ET AL: "Multiple emulsions for food use", CURRENT OPINION IN COLLOID & INTERFACE SCIENCE, LONDON, GB, vol. 12, no. 4-5, 1 October 2007 (2007-10-01), pages 213-220, XP022266053, ISSN: 1359-0294, DOI: 10.1016/J.COCIS.2007.07.006

## Description

The present invention relates to an emulsified food composition. It further relates to a method for making said food composition.

### Background of the invention

Dressings, such as for example salad dressings, mayonnaise or sauces, are available as emulsified products, more in particular, oil-in-water emulsions, wherein oil droplets are emulsified in a continuous water phase. To stabilize such an emulsion, the product contains an oil-in-water emulsifier. In mayonnaise, this emulsifier often is egg yolk.

In an oil-in-water emulsion, the oil content can be relatively high. For example, full fat mayonnaise can reach oil levels of up to 80 wt%. Such high fat levels are preferred by the consumers of an industrially manufactured emulsified food product, as the fat droplets contribute to the specific taste and texture which are associated with traditionally produced emulsified sauces like homemade mayonnaise. Indeed, the oil phase in mayonnaise helps to provide the specific structure of the product.

Since many years already a trend has developed to reduce the fat level in food products, for example to reduce the caloric intake of the products for reasons of health or dieting. Reducing the oil level in such emulsified products will directly influence the texture and taste experience, which might not be desired. This holds especially true for emulsions with an oil level of below 78 wt%.

An enduring need exists to reduce the oil level in emulsified food products while maintaining the texture and taste perception as much as possible, to resemble those of a product with a higher oil level. One way that is known in the art to reduce oil levels in an oil-in-water emulsified food product is to produce the product as a double emulsion. That is, the oil droplets contain water droplets, thereby reducing the oil level while maintaining the perception and behavior provided by an oil-in water emulsion with a higher oil level. Such double emulsion is made by first providing a first emulsion of a water phase (W1) in an oil phase (O) using a first emulsifier. The first emulsifier, the water-in-oil emulsifier, is often polyglycerol polyricinoleate (PGPR). PGPR is a strong emulsifier needed to prevent coalescence of the water droplets (W1) inside of the oil phase (O). PGPR (E476) is a food grade emulsifier and commercially feasible alternatives suitable in this context are rare if known at all. The first emulsion is then mixed in a water phase (W2) using a second emulsifier, an oil-in-water emulsifier, which is often egg yolk in case of mayonnaise.

A problem that is recognized with PGPR containing emulsions in the industry is that PGPR is considered undesired by some consumer groups. A challenge arose how to reduce the level of PGPR in oil-reduced emulsified food products, while maintaining
stability.

WO2011077073 discloses ways to improve stability of W/O/W salad dressings or mayonnaise, while reducing the PGPR content therein.

### Summary of the invention

This problem was surprisingly solved by a food composition in the form of an emulsion comprising:
- a continuous water phase (W2) which comprises
   - a water-in-oil emulsion (also referred to here as loaded oil droplets, or W1-O1 emulsion or primary emulsion) which is emulsified in the continuous water phase W2, wherein the water-in-oil emulsion comprises polyglycerol polyricinoleate (PGPR),
   - oil droplets without an internal water phase emulsified in the continuous water phase (also referred to herein as plain oil droplets, or 02),
- an oil-in-water emulsifier.

In a further aspect, the invention relates to a method to prepare a food composition in the form of an emulsion comprising a continuous water phase (W2), wherein the continuous water phase (W2) comprises water-in-oil (W1-O1) emulsion droplets which are emulsified in the continuous water phase (W2) and oil droplets (02) without an internal water phase which are emulsified in the continuous water phase (W2), , wherein the amount of water-in-oil emulsion droplets is from 10 to 55 wt %, based on the amount (wt) of water-in-oil emulsion droplets and oil droplets without an internal water phase taken tohether, the method comprising the steps of:
a) Providing a primary water-in-oil emulsion (W1-O1) by emulsifying water with oil and PGPR,
b) Either:
   Emulsifying the primary emulsion resulting from step a) and (plain) oil successively (in any order) or simultaneously with water in the presence of an oil-in-water emulsifier,
   or
   i. Producing a water-in-oil-in-water emulsion by emulsifying the primary emulsion resulting from step a) with water in the presence of an oil-in-water emulsifier,
   ii. Producing an oil-in-water single emulsion by emulsifying (plain) oil with water in the presence of an oil-in-water emulsifier,
   iii. Combining and mixing the emulsions resulting from step i and ii.

### Detailed description

The composition of the invention comprises a water-in-oil-in-water emulsion, also referred to as duplex emulsion or double emulsion. In contrast to conventional water-in-oil-in-water emulsions, the emulsions of the present invention are designed to comprise two different kind of oil droplets. These are oil droplets containing emulsified water (loaded oil droplets) and oil droplets which do not contain water (plain oil droplets). A first water-in-oil emulsion (loaded oil droplets) comprising an oil phase (O1) and a water phase (W1) is emulsified into a continuous, water phase (W2). In addition to the loaded droplets, a second oil phase (02) is emulsified in the continuous water phase (W2) in a way not to dilute the first oil phase (O1) and to result in plain oil droplets, according to the method of the invention.

The emulsified food composition of the present invention can comprise water and oil in varying amounts.

### Oil

Oil is preferably present in an amount of less than 72 wt%, more preferably less than 70 wt%, even more preferably less than 68 wt%, even more preferably less than 65 wt%. It is preferably present in an amount of more than 5 wt%, more preferably of more than 25 wt%, even more preferably more than 30 wt%, more preferably of more than 40 wt%, based on the weight of the composition. It may be preferred, that oil is present in an amount of from 5 to 72 wt%, more preferably of from 25 to 70 wt%, even more preferably from 30 to 68 wt%, more preferably of from 40 to 65 wt%, based on the weight of the composition. But also ranges combined of the previous end points may be preferred, and an amount of from 40 wt% to 72 wt%, or from 45 to 70 wt%, or from 50 to 68 wt% or from 52 to 65% may be preferred.

The oil that can be used in the present invention can be the edible oils conventionally used in the preparation of food emulsions. Suitable oils for the present invention are predominately composed of triglycerides. The triglyceride mixture present in the oil will preferably not crystallise at temperatures above room temperature (20 °C) preferably they will not crystallise at temperatures above 5 °C. The oil is liquid at room temperature (20 °C), more preferably, the oil is liquid at 5 °C. Solidified oil, or crystalized oil at room temperature, can disturb the texture of a water-in-oil-in-water emulsions, and is preferably absent. The oil is preferably chosen from soybean oil, sunflower oil, canola oil, rapeseed oil, olive oil and mixtures thereof.

According to the invention, the oil is present in the form of a water-in-oil emulsion (the loaded droplets) which is emulsified in the continuous water phase, and in the form of oil droplets without an internal water phase (plain droplets) emulsified in the continuous water phase.

It is preferred, that the amount of loaded oil droplets (W1-O1) is more than 10 wt%, preferably more than 15 wt% and more preferably more than 20 wt%, based on the amount (wt) of total oil droplets (loaded and plain oil droplets together). The amount is preferably less than 55 wt% and more preferably less than 50 wt%, and most preferably less than 45 wt%, based on the amount (wt) of total oil droplets (loaded and plain oil droplets together). The amount is preferably of between 10 and 55 wt%, more preferably of from 15 to 50 wt%, and more preferably of from 20 to 45 wt%, based on the amount (wt) of total oil droplets (loaded and plain oil droplets together). The amount is calculated as (weight loaded oil droplets) / (weight loaded oil droplets + weight plain oil droplets)*100.

The amount of plain oil droplets (02) on the total amount (wt) of oil droplets (loaded and plain oil droplets) is preferably more than 45 wt%, preferably more than 50 wt% and more preferably more than 55 wt%. The amount is preferably less than 90 wt% and more preferably less than 85 wt%, and most preferably less than 80 wt%. The amount is preferably of between 45 and 90 wt%, more preferably of from 50 to 85 wt%, and more preferably of from 55 to 80 wt%.

The total amount of the plain and loaded oil droplets taken together is preferably of from 50 to 80 wt%, more preferably of from 52 to 78 wt%, even more preferably of from 54 to 75 wt%, even more preferably of from 56 to 70 wt%, even more preferably of from 58 to 65 wt% based on the weight of the food composition of the invention. It may be preferred, that the total amount of the plain and loaded oil droplets taken together is preferably of from 25 to 80 wt%, more preferably of from 30 to 78 wt%, even more preferably of from 40 to 75 wt% based on the weight of the food composition of the invention.

It is preferred that the amount of loaded oil droplets is from 5 to 40 wt%, more preferably of from 10 to 35 wt%, even more preferably of from 15 to 30 wt% based on the weight of the food composition of the invention.

It is preferred that the amount of plain oil drops is higher than 15 wt%, more preferably higher than 20 wt%, even more preferably higher than 45 wt%, based on the weight of the food composition. It is preferred that the amount of plain oil droplets is from 15 to 65 wt%, more preferably of from 20 to 60 wt%, even more preferably of from 45 to 60 wt% based on the weight of the food composition of the invention.

### Water

The loaded oil (W1-O1) and plain oil (02) is emulsified in water to result in a combined water-in-oil-in-water emulsion (W1-O1-W2) and oil-in-water (O2-W2) emulsion with a continuous water phase (W2). The total amount of water (W1+W2) in the food composition is preferably of from 25 to 75 wt%, more preferably of 28 from 60 wt%, more preferably of 30 from 55 wt%, more preferably of 32 from 50 wt% and most preferably of from 35 to 48 wt%, based on the weight of the total composition.

It is in particular preferred, that the water phase W1, which is the water inside of loaded oil droplets, is present in an amount of more than 30 wt%, preferably more than 35 wt%, preferably more than 40 wt%, even more preferably more than 45 wt%, based on the weight of the primary emulsion (W1-O1). The amount of the water phase W1, based on the weight of the primary emulsion (W1-O) is preferably less than 70 wt%, more preferably less than 65 wt%, even more preferably less than 60 wt%, based on the weight of the primary emulsion (W1-O1). The amount of the water phase W1, based on the weight of the primary emulsion (W1-O) is preferably of from 30 to 70 wt%, more preferably of from 35 to 60 wt%, more preferably of from 38 to 55 wt%, even more preferably of from 40 to 50 wt%, based on the weight of the primary emulsion (W1-O1).

The continuous water phase (W2), is preferably present in an amount of from 20 to 50 wt%, more preferably of from 22 to 48 wt%, more preferably of from 25 to 46 wt%, more preferably of from 30 to 44 wt%, and most preferably of from 35 to 42 wt% of the weight of the total composition. It may be preferred, that the continuous water phase (W2), is preferably present in an amount of from 20 to 75 wt%, more preferably of from 22 to 70 wt%, even more preferably of from 25 to 60 wt% based on the weight of the food composition of the invention.

### Emulsifiers

The composition of the invention comprises PGPR. PGPR is used as a water-in-oil emulsifier. Hence, the loaded oil droplets comprise PGPR. In addition to PGPR, possible other water-in-oil emulsifiers can be present in the loaded oil droplets. It is more preferred that PGPR is the only water-in-oil emulsifier. In the loaded oil droplets, PGPR preferably is dissolved in the oil phase of the loaded droplets, *i.e.* in the O1 oil phase. Preferably, no PGPR is added to the plain oil droplets. Consequently, the plain oil droplets are usually substantially free from PGPR. The skilled person will understand that some (minor) transfer of PGPR from loaded to plain droplets in the composition could occur.

PGPR is preferably present in an amount of less than 0.9 wt%, preferably 0.7 wt% or less, preferably 0.5 wt% or less and more preferably 0.4 wt% or less, based on the weight of the food composition. PGPR is preferably present in an amount of more than 0.1 wt%, more preferably more 0.2 wt% or more and even more preferably 0.25 wt% or more, based on the weight of the food composition. It may be preferred, that the amount of PGPR is from 0.1 to 0.9 wt%, more preferably of from 0.2 to 0.7 wt% and most preferably of from 0.25 to 0.4 wt%, based on the weight of the food composition.

The level of PGPR is preferably less than 0.9 wt%, preferably less than 0.8 wt%, even more preferably less than 0.7 wt%, based on the weight of the total oil in the food composition PGPR is preferably present in an amount of from 0.1 to 0.9 wt%, preferably of from 0.2 to 0.8 wt%, more preferably of from 0.3 to 0.7 wt%, based on the weight of the total oil in the composition (O1+O2).

The oil droplets, either loaded or plain, are emulsified in the continuous water phase (W2) by means of an oil-in-water emulsifier. The emulsifier serves to disperse oil droplets in the continuous aqueous phase. Preferably the emulsifier comprises an oil-in-water emulsifier originating from egg, preferably from egg yolk. Egg is preferably hen egg. Preferably the composition comprises egg yolk as an ingredient which also provides the oil-in-water emulsifier. The presence of egg yolk may be beneficial for taste, emulsification and/or stability of the oil droplets in the composition of the invention. Egg yolk contains phospholipids, which act as emulsifier for oil droplets. Preferably the concentration of egg yolk in the composition of the invention ranges from 1% to 8 wt%, more preferred from 2 to 6 wt%, based on the weight of the food composition. The egg yolk may be added as egg yolk component, meaning largely without egg white. Alternatively, the composition may also contain whole egg, containing both egg white and egg yolk. Preferably the concentration of phospholipids originating from egg yolk ranges from 0.05 to 1 wt%, preferably from 0.1 to 0.8 wt%, more preferably 0.2 to 0.6 w%, based on the weight of the food composition.

Alternatively, or in addition to egg-derived emulsifier, the composition of the invention may comprise an oil-in-water emulsifier that does not originate from egg or egg yolk. Preferably such oil-in-water emulsifier is from plant or botanical origin. It may then be used native or modified. In this way, a vegetarian oil-in-water emulsifier can be created preferably without ingredients from animal origin. Preferred vegetarian emulsifiers are legume proteins, whey protein or legume flours. Preferred emulsifiers from botanical origin are legume proteins, or legume flours.

### Other ingredients

As set out above, double emulsions according to the present invention contain two different water phases, the emulsified water phase (W1) and the continuous water phase (W2). Both water phases are separated by an oil layer (O1). The composition of the invention may further comprise taste ingredients in both of the water phases (W1 and W2). Some of these taste ingredients, preferably salt, sugar and acidity regulators (e.g. organic acids, lemon juice etc) can influence the osmotic pressure of the water phases.

As is known to the skilled person, it is beneficial for the storage stability of a double emulsion if the osmolality of the W1 phase is equal or somewhat higher than in the W2 phase. Osmolality differences of, for example, about 200 mOsmol/kg were found to be preferable (G. Muschiolik, Multiple emulsions for food use, Current Opinion in Colloid & Interface Science, Volume 12, Issues 4-5, p213-220, 2007). Therefore, it can be preferred that the osmolality of the W1 phase (the water that is part of the water-in-oil emulsion, W1-O1) is equal or higher than that of the W2 phase (the continuous water phase), more preferably, the difference is, for example, more than 200 mOsmol/kg. The osmolality can be adjusted by the taste ingredients in each of the W1 and W2 phases.

The composition preferably comprises at least one or more taste ingredient from the group of salt, sugar, and acidity regulator, preferably the composition comprises salt, sugar, and acidity regulator.

The food composition of the invention preferably comprises one or more acidity regulators. Suitable acidity regulators according to the present invention preferably comprise, one or more acidity regulators selected from the group consisting of acetic acid, citric acid, malic acid, phosphoric acid, lactic acid and combinations thereof. More preferably, the composition comprises acetic acid, citric acid or a combination thereof. It is noted that acetic acid can be added in the form of, for instance, vinegar. Citric acid can be added in the form of, for example, lemon juice. The one or more acidity regulators are preferably present in the composition in a total concentration of from 0.05 to 3%, more preferably of from 0.1 to 2 % by weight of the total food composition.

The food composition of the present invention preferably comprises salt. Salt can be any edible salt, preferably sodium chloride, potassium chloride or mixtures thereof. More preferably the salt comprises sodium chloride, most preferably is sodium chloride. The salt content of the food composition of the present invention is preferably in the range of from 0.2 to 10 wt%, more preferably of from 0.3 to 5 wt%, even more preferably from 0.5 to 4 wt% and most preferably of from 0.7 to 3 wt% by weight of food composition. Most preferably, sodium chloride is present in the range of from 0.2 to 10 wt%, more preferably of from 0.3 to 5 wt%, even more preferably from 0.5 to 4 wt% and most preferably of from 0.7 to 3 wt% by weight of the total food composition.

The composition of the invention preferably comprises sugars such as one or more monosaccharides and/or disaccharides. Preferred one or more monosaccharides and/or disaccharides include fructose, glucose, and sucrose. The concentration of one or more monosaccharides and/or disaccharides in the composition preferably ranges from 0.3 to 15 wt%, more preferably, from 0.5 to 10 wt%, even more preferably from 0.7 to 8 wt%, by weight of the total food composition.

The food composition of the present invention may suitably contain flavouring materials, preservatives, colourings and/or anti-oxidants. Preferably it comprises flavouring materials selected from mustard, herbs, spices, natural and artificial flavorings and mixtures thereof.

The pH of the composition is preferably less than 7, more preferably less than 5. Even more preferably the pH is in the range of 2-4.5, even more preferably in the range of 2.5-4.0, most preferably in the range of 2.8-4.0.

### Other parameters

### Consistency

The consistency of the composition of the invention is preferably a consistency which is recognised by the consumer as the consistency of a mayonnaise, a sauce or of a salad dressing, preferably of a mayonnaise or a salad dressing, most preferably of a mayonnaise. These compositions are viscoelastic materials that exhibit both viscous and elastic characteristics when undergoing deformation. Viscous and elastic behaviour of materials can be measured by various instruments, of which a state of the art rheometer is a suitable instrument for the present compositions. Viscous and elastic properties by rheometer can be obtained by various methods. Oscillation measurements are suitable to characterize the compositions described in the present invention. In oscillation measurements, the elastic property is commonly characterized by the storage modulus G' and the viscous property by the loss modulus G". Both moduli are only valid in the linear deformation area, as known in the art. The AR 2000 EX rheometer (TA-Instruments) is a suitable state of the art rheometer used for the analysis of the compositions of the present invention. A 4 cm steel plate geometry with 1 mm gap is a suitable geometry. Other instrument settings are known by skilled in the art operators. The consistency of the compositions of the present invention is described by their storage modulus G', measured at 1 Hz and 20°C, which is preferably within the range of 100-3500 Pa, more preferably in the range of 300-2000 Pa, most preferably in the range of 400-1500 Pa.

### Oil Droplet size

The oil droplet size (loaded and plain) can be measured using image analysis upon microscopic analysis, preferably by CSLM (confocal scanning light microscopy). Such droplet size is typical for industrially prepared emulsified food compositions. Homemade emulsified food compositions show a much larger droplet size. The size of the droplets can be suitably measured using an image analysis program such as e.g. Fiji. It is preferred that at least 90% of the oil droplets (loaded and plain) are below 25µm, preferably below 20µm, even more preferably below 15µm, most preferably below 10µm.

It is preferred that 90% of the water droplets within the loaded oil droplets have a diameter below 5µm, preferably below 4µm, even more preferably below 3µm.

An advantage of the present invention is that the total level of oil can be reduced, while maintaining the texture and the taste perception of eating an emulsion with a higher oil level. This is because the total amount of droplets is maintained at a similar level as in the comparable emulsion (*e.g*. similar taste perception) being an emulsified food product such as a mayonnaise or dressing with the same amount of (plain) oil droplets, *i.e.* wherein no water-in oil emulsion is present. Accordingly, a food composition of the present invention is preferred, wherein the texture expressed as storage modulus (G' in Pa, after 1 day or 1 week storage) is the same (within a 10% error margin) or higher, if compared with a composition which is in the form of an oil-in-water single emulsion, and wherein the amount of oil is at least 10 wt% lower for the composition in this invention. For example, a composition according to this invention with a) a total oil content (O1+O2) of 67 wt% when compared to a composition b) which is a single emulsion with the same ingredients but with 75 wt% oil content. That represents an oil reduction of approximately 10% of the initial oil content of the comparative single emulsion ((75-67)/75*100=10.6% reduction). a) will have a G' equal (within a 10% error margin) or higher than b).

### Method

Features set out in detail above in the context of the composition equally apply for the method, unless indicated otherwise.

In a further aspect, the invention relates to a method to prepare a food composition in the form of an emulsion comprising a continuous water phase (W2), wherein the continuous water phase (W2) comprises water-in-oil (W1-O1) emulsion droplets which are emulsified in the continuous water phase (W2) and oil droplets (02) (without an internal water phase) which are emulsified in the continuous water phase (W2), , wherein the amount of water-in-oil emulsion droplets is from 10 to 55 wt%, based on the amount (wt) of water-in-oil emulsion droplets and oil droplets without an internal water phase taken tohether, the method comprising the steps of:
a) Providing a primary water-in-oil emulsion (W1-O1) by emulsifying water with oil and PGPR,
b) Either:
   Emulsifying the primary emulsion resulting from step a) and oil successively (in any order) or simultaneously with water in the presence of an oil-in-water emulsifier,
   or
   i. Producing a water-in-oil-in-water emulsion by emulsifying the primary emulsion resulting from step a) with water in the presence of an oil-in-water emulsifier,
   ii. Producing a single oil-in-water emulsion by emulsifying oil with water in the presence of an oil-in-water emulsifier,
   iii. Combining and mixing the emulsions resulting from step i and ii.

In step a) of the method a water-in-oil emulsion is provided. This primary water-in-oil emulsion is provided by emulsifying water, oil and PGPR. It is preferred that PGPR is dissolved in the oil before the water and the oil are combined and emulsified. PGPR is preferably added in an amount of less than 0.9 wt%, preferably less than 0.8 wt%, more preferably less than 0.7 wt%, and more preferably of from 0.1 to 0.9 wt%, more preferably in an amount of from 0.2 to 0.8 wt%, even more preferably 0.3 to 0.7 wt%, based on the weight of the total oil in the food composition that results from the method. It is preferred that PGPR is added in an amount of less than 0.9 wt%, even more preferably less than 0.8 wt%, even more preferably less than 0.7 wt%, even more preferably less than 0.4 wt% even more preferably from 0.1 to 0.9 wt%, more preferably of from 0.2 to 0.8 wt%, even more preferably of from 0.25 to 0.7 wt%, even more preferably of from 0.25 to 0.4 wt% based on the weight of the total resulting food composition.

The water (W1) and oil (O1) can suitably be emulsified using any suitable emulsification equipment known in the art such as: e.g. Silverson mixer, colloid mill, high pressure homogeniser, rotor-stator.

In step b) of the method of the invention a double emulsion (water-in-oil-in-water) is prepared. In step b) of the method the water-in-oil emulsion resulting from step a) is emulsified in water. The resulting external, *i.e.* the continuous, water phase (W2), is preferably of from 20 to 50 wt%, more preferably of from 22 to 48 wt%, more preferably of from 25 to 46 wt%, and most preferably of from 30 to 44% of the total resulting food composition. Water-in-oil emulsion (W1-O1) is preferably added in an amount of from 5 to 40 wt%, more preferably of from 10 to 35 wt%, even more preferably of from 15 to 30 wt%, based on the weight of the resulting emulsified food composition.

Also, plain oil, *i.e.* without an internal water phase (W1), is emulsified in the water. Plain oil is added preferably in such an amount that the amount (wt) of plain oil droplets on plain oil droplets and loaded oil droplets taken together in the resulting emulsion of the invention is more than 45 wt%, preferably more than 50 wt% and more preferably more than 55 wt%. The amount is preferably less than 90 wt%, more preferably less than 85 wt% and more preferably less than 80 wt%. The amount is preferably of between 45 and 90 wt%, more preferably of between 50 to 85 wt% and even more preferably of between 55 and 80 wt%. The amount is calculated as (weight loaded oil droplets) / (weight loaded oil droplets + weight plain oil droplets)*100. It is preferred that such an amount is at least present between 1 day and 1 week after production of the composition of the invention.

The plain oil and the water-in-oil emulsion can be emulsified into the water (W2) simultaneously, or after each other, thereby forming plain oil droplets and loaded oil droplets respectively. So, an emulsion is produced that contains both water-in-oil emulsion droplets (loaded droplets) and plain oil droplets. Emulsification of plain oil and water-in-oil emulsion in the water can be carried out simultaneously or after each other. If carried out after each other, either the plain oil phase or the water-in-oil emulsion can be emulsified in the water first (W2). Emulsification of the plain oil and the loaded oil is carried out in the presence of an oil-in-water emulsifier. As set out in the context of the product above in more detail, preferably an egg-based emulsifier is used such as egg yolk. Egg yolk is preferably used in an amount of from 1 to 8 wt%, more preferably in an amount of from 2 to 6 wt%, based on the weight of the resulting food composition. But plant-based emulsifier may be used as well as alternative or in addition to egg-derived emulsifier.

The water, the water-in-oil emulsion and the plain oil (added successively (in any order) or simultaneously with water) in the presence of an oil-in-water emulsifier are worked into a water-in-oil-in-water emulsion and an oil in water emulsion, respectively, sharing the same continuous water phase (W2), by applying shear, which can be suitably done with, for example, a Silverson mixer, colloid mill, high pressure homogenizer or rotor-stator machine. It is in the skill of the artisan to prepare emulsions using this machinery, see for example G. Muschiolik, Multiple emulsions for food use, Current Opinion in Colloid & Interface Science, Volume 12, Issues 4-5, page 42, 2007.

Instead of this continuous emulsifying process, the same result can be achieved by preparing in step b) two separate emulsions, an oil-in-water emulsion and a water-in-oil-in water emulsion, which are subsequently combined. To this end, the water-in-oil emulsion resulting from step a) is emulsified with water in the presence of an oil-in-water emulsifier. A next (oil-in-water) emulsion is prepared by emulsifying plain oil with water in the presence of an oil-in-water emulsifier. Oil-in-water emulsifier is, for example, egg yolk, used in an amount of from 1 to 8 wt%, preferably of from 2 to 6 wt% based on the weight of each emulsion. These two emulsions are then combined and mixed. The single emulsion and double emulsion are mixed in specific amounts to obtain an amount of loaded oil droplets on the total amount of oil droplets (loaded and plain) of more than 10 wt%, preferably more than 15 wt% and more preferably more than 20 wt%. The amount is preferably less than 55 wt% and more preferably less than 50 wt%, and most preferably less than 45 wt%. The amount is preferably of between 10 and 55 wt%, more preferably of from 15 to 50 wt%, and more preferably of from 20 to 45 wt%. The amount is calculated as (weight loaded oil droplets) / (weight loaded oil droplets + weight plain oil droplets)*100. This results in a double emulsion comprising loaded oil droplets and plain oil droplets according to the invention.

As described in the context of the composition of the invention, taste providing ingredients can preferably be added to the water phases (W1 and/or W2), such as salt, sugar, or acidity regulator. As set out above, acidity regulator is preferably added in an amount of from 0.05 to 3 wt%, more preferably of from 0.1 to 2 wt% of the resulting food composition. The acidity regulator is preferably added as vinegar. The pH of the water phase (W1) is preferably adjusted to less than 5, more preferably of less than 4, more preferably of between 2 and 4.5, more preferably of between 2.5 and 4, most preferably between 2.8 and 4.

Salt may preferably be added, preferably sodium chloride, potassium chloride or mixtures thereof. More preferably salt comprises sodium chloride, most preferably is sodium chloride. Salt is preferably added in an amount of from 0.2 to 10 wt%, more preferably of from 0.3 to 5 wt%, even more preferably from 0.5 to 4 wt% and most preferably of from 0.7 to 3 wt% by weight of the resulting food composition. Most preferably, sodium chloride is added in the range of from 0.2 to 10 wt%, more preferably of from 0.3 to 5 wt%, even more preferably from 0.5 to 4 wt% and most preferably of from 0.7 to 3 wt% by weight of the resulting food composition.

Sugars are preferably added such as one or more monosaccharides and/or disaccharides. Preferred one or more monosaccharides and/or disaccharides include fructose, glucose, and sucrose. One or more monosaccharides and/or disaccharides are preferably added in an amount of from 0.3 to 15 wt%, more preferably, from 0.5 to 10 wt%, even more preferably from 0.7 to 8 wt%, by weight of the food composition.

Salt, sugar and acidity regulator are preferably added to the water phase W1 (e.g. in step a) or W2 (e.g. in step b) or to both water phases. Preferably they are added to both the continuous water phase W2 and the internal water phase W1.

The invention will now be exemplified by the following non-limiting examples.

### Examples

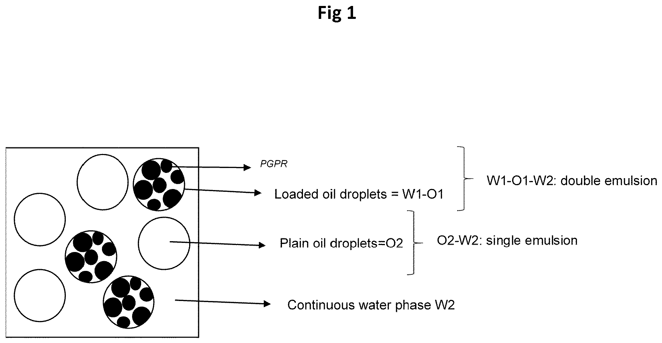

### Nomenclature, with reference to Figure 1:

A) Total oil droplets= plain+loaded droplets by weight → O2+(W1-O1)
B) Emulsified water phase= W1 (water + taste ingredients)
C) Plain oil droplets = → O2
D) Loaded oil droplets=oil droplets with emulsified water W1→ W1-O1 emulsion,
E) Water phase= continuous water phase→ W2 (water + taste ingredients)
F) Total oil content=O1+O2

### Ingredient list for the examples:

a) Drinking Water: tap water
b) Vegetable oil: Rapeseed oil, Sunflower oil or Soybean oil
c) PGPR (GRINDSTED^{®} PGPR 90, Danisco, Denmark)
d) Egg Blend: 53% egg yolk (hen), 47% egg white (hen)
e) Egg Yolk: 100% egg yolk (hen)
f) Taste ingredients: mix of sugar, salt and acidity regulators
   a. Sugar: Sucrose
   b. Salt: sodium chloride
   c. Acidity regulators: Vinegar (with 12% acetic acid) and citric acid

### Processing

All examples were prepared according to the following steps, except otherwise stated.
- W1-O1-W2 (reference)
   *a) W1-O1 Preparation*
      g) Mixture (a) was prepared by adding taste ingredients to water and mixing it
      h) Emulsifier (PGPR) was added to oil O1 (Mixture (b))
      i) Mixture (a) was slowly added to Mixture (b) and emulsified using a high shear mixer (Silverson model L5M-A labscale mixer emulsor screen) at 4000 rpm while mixing).
      j) When all Mixture (a) was fully incorporated to Mixture (b), the mixing speed was increased to 8000 rpm for ~ 4 min. (Mixture (c))
   *b) W1-O1-W2*
      1. Mixture (d) was prepared by adding taste ingredients (except for the acidity regulators) and eggs to water and mixing it
      2. Mixture (c) was slowly added to Mixture (d) and emulsified using a high shear mixer (Silverson model L5M-A labscale mixer with emulsor screen) at 4000 rpm while mixing. When all Mixture (c) was incorporated to Mixture d, the mixing speed was increased to 8000 rpm for ~ 4 min. (Mixture (e))
      3. Silverson speed was reduced to 4000 rpm and acidity regulators were added to Mixture (e) mixing for 2 min (Mixture (f)). Final pH is adjusted with acidity regulators to 3.6-4.0.
- (O2-W2) + (W1-O1-W2) (this invention)
   *1. W1-O1 Preparation*
   k) Mixture (a) was prepared by adding taste ingredients to water and mixing it
   l) Emulsifier (PGPR) was added to oil O1 (Mixture (b))
   m) Mixture (a) was slowly added to Mixture (b) and emulsified using a high shear mixer (Silverson model L5M-A labscale mixer with emulsor screen) at 4000 rpm while mixing).
   n) When all Mixture a was fully incorporated to Mixture (b), the mixing speed was increased to 8000 rpm for ~ 4 min. (Mixture (c))

### 2. O2-W2 preparation

4. Mixture (d) was prepared by adding taste ingredients (except for the vinegar) and eggs to water and mixing it
5. 02 (plain oil) was slowly added to Mixture (d) and emulsified using a high shear mixer (Silverson model L5M-A labscale mixer with emulsor screen) at 6000 rpm while mixing). (Mixture (e))

### 3. (O2-W2) + (W1-O1-W2)

6. Subsequently, Mixture (c) was slowly added to Mixture (e) and emulsified using a high shear mixer (Silverson model L5M-A labscale mixer with emulsor screen) at 6000 rpm while mixing
7. When all Mixture (c) was incorporated to Mixture (e), mixing was kept for 2 min at 6000 rpm (Mixture (f)).
8. Silverson speed is reduced to 2000 rpm and acidity regulators is added to Mixture (f) mixing for 2 min (Mixture (f)). Final pH is adjusted with acidity regulators to between 3.6-4.0.

### Example 1

Example 1 shows two comparative examples that shows that to reduce oil, a high PGPR double emulsion is required. Reducing PGPR results in unstable emulsion. Both products of example 1a and 1b had 75.1 wt% total oil droplets (plain and loaded droplets together) in the total formulation, and a water content of 50 wt% loading of loaded oil droplets. The pH was ~ 3.9 for both products.

| | | 1a (comparative) | 1b (comparative) |
|---|---|---|---|
| | Phase | wt% of total formulation | wt% of total formulation |
| Water in W1 | Loaded oil droplets (W1-O1) | 32.5 | 32.5 |
| Taste ingredients in W1* | Loaded oil droplets (W1-O1) | 5.1 | 5.1 |
| Sunflower oil (O1) | Loaded oil droplets (W1-O1) | 36.6 | 37.1 |
| PGPR | Loaded oil droplets (W1-O1) | **0.90** | **0.45** |
| Water in W2 | Continuous water (W2) | 13.1 | 13.1 |
| Egg Blend in W2 | Continuous water (W2) | 6.7 | 6.7 |
| Taste ingredients in W2* | Continuous water (W2) | 5.1 | 5.1 |
| Total | | 100.0 | 100.0 |

| | Unit | 1a (comparative) | 1b (comparative) |
|---|---|---|---|
| Plain oil droplets | wt% of total formulation | 0 | 0 |
| Loaded oil droplets | wt% of total formulation | 75.1 | 75.1 |
| Total oil droplets | wt% of total formulation | 75.1 | 75.1 |
| Amount loaded oil/total oil droplets | wt% of total oil droplets | **~100*** | **~100*** |
| G' at 1 day storage | Pa | 1812 | 427 |
| G' at 1 week storage | Pa | 1692 | Phase separated |

| | | | |
|---|---|---|---|
| *) Includes: Acidity regulator, salt, sugars | | | |

In comparative Example 1a a stable double emulsion could be produced and provided a reduction of oil in the composition compared to a mayonnaise with 75 wt% of fat. However, a high concentration of PGPR (0.9 wt%) was required to achieve this effect.

In comparative Example 1b the PGPR level was reduced to 0.45 wt%. That resulted in an unstable product which was not homogeneous after a week (phase separated) in addition to being already very thin at day one (just after preparation) compared to the equivalent composition (1a) with higher concentration of PGPR.

### Example 2

To maintain the same amount of oil droplets (similar texture) and reduce the amount of PGPR one would reduce the internal water phase, to cope with the reduced PGPR level and associated instability problems. This appears unstable.

Both products had 75 wt% total oil droplets (loaded O1-W1 and plain oil 02 droplets together) in the total formulation, 0.4 wt% PGPR in the total formulation and 59.6 wt% oil in the total formulation.

The pH was ~ 3.9 for both products.

| | Phase | 2a (comparative) | 2b |
|---|---|---|---|
| | | % | % |
| Water in W1 | Loaded oil droplets (W1-O1) | 12.9 | 13.3 |
| Taste ingredients in W1* | Loaded oil droplets (W1-O1) | 2.1 | 1.7 |
| PGPR | Loaded oil droplets (W1-O1) | 0.4 | 0.4 |
| Sunflower oil (O1) | Loaded oil droplets (W1-O1) | 59.6 | 14.6 |
| Sunflower oil (O2) | Plain Oil droplets (O2) | 0 | 45 |
| Water in W2 | Continuous water (W2) | 13.1 | 13.5 |
| Egg Blend in W2 | Continuous water (W2) | 6.7 | 6.7 |
| Taste ingredients in W2* | Continuous water (W2) | 5.2 | 4.8 |
| Total | | 100.0 | 100.0 |

| | Unit | | |
|---|---|---|---|
| Plain oil droplets | wt% of total formulation | 0 | 45 |
| Loaded oil droplets | wt% of total formulation | 75 | 30 |
| Total oil droplets | wt% of total formulation | 75 | 75 |
| Amount loaded oil/total oil droplets | wt% of total oil droplets | ~ 100 | ~ 40 |
| Loading of loaded oil droplets | wt% of loaded oil droplets | 20 | 50 |
| G' at 1 day storage | Pa | 126 | 556 |
| G' at 1 week storage | Pa | Phase separated | 408 |

| | | | |
|---|---|---|---|
| *) Includes: Acidity regulator, salt, sugars | | | |

In example 2b (this invention) an oil reduction of ~20% (compared to a 75% fat mayonnaise; (75-59.6)/75*100=20.5%) was achieved, comparable to example 2a. However, the composition of example 2a was unstable (phase separation after 1 week) whereas 2b was homogeneous after 1 week of storage. The product of example 2b was also thicker (or higher in consistency) compared to 2a, even fresh (at 1 day, after preparation).

### Example 3

Example 3 describes products according to the present invention that are within the optimum range (ratio) of loaded droplets to the total amount of droplets (plain+ loaded) (examples 3a to 3c). Outside this range the products are less stable (comparative example 3d).

All products of this example contain 75 wt% of total oil droplets (loaded and plain droplets together) in the total formulation, 50 wt% loading of the loaded oil droplets and 0.4 wt% PGPR in total formulation. The pH of the compositions was ~ 3.7 for all products

| | phase | 3a | 3b | 3c | 3d |
|---|---|---|---|---|---|
| | | this invention | this invention | this invention | comparative |
| Water in W1 | Loaded oil droplets (W1-O1) | 6.2 | 10.3 | 12.3 | 16.4 |
| Taste ingredients in W1* | Loaded oil droplets (W1-O1) | 1.3 | 2.2 | 2.7 | 3.6 |
| Soybean oil | Loaded oil droplets (W1-O1) | 7.1 | 12.1 | 14.6 | 19.6 |
| PGPR 90 | Loaded oil droplets (W1-O1) | **0.4** | **0.4** | **0.4** | **0.4** |
| Sunflower oil | Plain Oil droplets (O2) | 60 | 50 | 45 | 35 |
| Drinking Water | Continuous water (W2) | 13.7 | 13.7 | 13.7 | 13.7 |
| Egg yolk in W2 | Continuous water (W2) | 5.1 | 5.1 | 5.1 | 5.1 |
| Taste ingredients in W2* | Continuous water (W2) | 6.2 | 6.2 | 6.2 | 6.2 |
| Total | | 100 | 100 | 100 | 100 |

| | Unit | | | | |
|---|---|---|---|---|---|
| Plain oil droplets | wt% of total formulation | 60 | 50 | 45 | 35 |
| Loaded oil droplets | wt% of total formulation | 15 | 25 | 30 | 40 |
| Total oil droplets | wt% of total formulation | **75** | **75** | **75** | **75** |
| Total oil content | wt% of total formulation | 67 | 62 | 60 | 55 |
| Amount loaded oil in total oil droplets | wt% of total oil droplets | -20 | -33 | -40 | -53 |
| G' at 1 day storage | Pa | 371 | 471 | 439 | 239 |
| G'at 1 week storage | Pa | 316 | 386 | 327 | Phase separated |

| | | | | | |
|---|---|---|---|---|---|
| *) Includes: Acidity regulator, salt, sugars | | | | | |

In the context of the present example, above an amount of 50 wt% loaded oil on total oil droplets the product (3d) was less stable and phase separated after 1 week storage. This level of oil reduction could not be achieved with this amount at a PGPR level of 0.4 wt%.

Products 3a to 3c were stable after 1 week and, oil reduction up to ~20% (compared to a composition with 75 wt% oil) could be achieved with 0.4 wt% PGPR in total formulation.

### Example 4

Example 4 shows additional examples of products with improved stability according to this invention. The example illustrates an optimum range (ratio) of loaded droplets to the total amount of droplets (plain+ loaded).

All products in this example contain 75 wt% total oil droplets (plain oil and loaded oil droplets together) in total formulation, 50 wt% loading of loaded oil droplets, 0.4 wt% PGPR in total formulation.

The pH was ~ 3.9 for all products.

| | Phase | 4a this invention | 4b this invention | 4c this invention |
|---|---|---|---|---|
| | | | | |
| Water in W1 | Loaded oil droplets (W1-O1) | 6.6 | 8.8 | 11.0 |
| Taste ingredients in W1* | Loaded oil droplets (W1-O1) | 0.9 | 1.2 | 1.5 |
| **Soybean oil** | Loaded oil droplets (W1-O1) | **7.1** | **9.6** | **12.1** |
| **PGPR 90** | Loaded oil droplets (W1-O1) | **0.4** | **0.4** | **0.4** |
| **Sunflower oil** | Plain Oil droplets (O2) | **60** | **55** | **50** |
| Drinking Water | Continuous water (W2) | 13.5 | 13.5 | 13.5 |
| Egg Blend in W2 | Continuous water (W2) | **6.7** | **6.7** | **6.7** |
| Taste ingredients in W2* | Continuous water (W2) | 4.8 | 4.8 | 4.8 |
| total | | 100 | 100 | 100 |

| | Unit | | | |
|---|---|---|---|---|
| Plain oil droplets | wt% of total formulation | 60 | 55 | 50 |
| Loaded oil droplets | wt% of total formulation | 15 | 20 | 25 |
| Total oil droplets | wt% of total formulation | 75 | 75 | 75 |
| Total oil content | wt% of total formulation | 67 | 65 | 62 |
| Amount loaded oil in total oil droplets | wt% of total oil droplets | -20 | -27 | -33 |
| G' at 1 day storage | Pa | 458 | 520 | 521 |
| G' at 1 week storage | Pa | 388 | 435 | 437 |

| | | | | |
|---|---|---|---|---|
| *) Includes: Acidity regulator, salt, sugars | | | | |

The products of examples 4a to 4c were stable after 1 week and oil reduction up to 21% (compared to a 75 wt% oil composition) could be achieved with 0.4 wt% PGPR in total formulation (low concentration of PGPR).

### Example 5

Example 5 illustrates a production process wherein the product of the invention is prepared by combining a double emulsion and a single emulsion.

| 5a | Phase | Double Emulsions with high PGPR level (W1-01-W2) |
|---|---|---|
| | | |
| Water in W1 | Loaded oil droplets (W1-O1) | 38.8 |
| Taste ingredients in W1* | Loaded oil droplets (W1-O1) | 6.2 |
| **Sunflower oil (O1)** | Loaded oil droplets (W1-O1) | **29.1** |
| **PGPR 90** | Loaded oil droplets (W1-O1) | **0.9** |
| Drinking Water | Continuous water (W2) | 13.1 |
| Egg Blend in W2 | Continuous water (W2) | **6.7** |
| Taste ingredients in W2* | Continuous water (W2) | 5.2 |
| total | | 100 |

| | | |
|---|---|---|
| *) Includes: Acidity regulator, salt, sugars. Final pH is adjusted with acidity regulators to 3.6-3.9. | | |

| Example 5b | | Single emulsion (O2-W3) |
|---|---|---|
| | | |
| Water (W3) | Continuous water (W3) | 12.5 |
| Taste ingredients* | Continuous water (W3) | 5.6 |
| **Rapeseed oil (O2)** | Plain Oil droplets (O3) | **75.2** |
| Egg Blend | Continuous water (W3) | **6.7** |
| total | | 100 |

| | | |
|---|---|---|
| *) Includes: Acidity regulator, salt, sugars | | |

Example 5a was prepared as described in the processing section W1-O1-W2 (reference). Product 5b was prepared as following:
All dry ingredients were mixed with egg and water for 30 seconds at 1000 rpm with a high shear mixer (Silverson model L5M-A labscale mixer with emulsor screen). Oil was then slowly added at 4000 rpm and then speed was increased to 8000 rpm for approximately 4 minutes. Speed was reduced to 4000 rpm and acidity regulators (where added) and further mixed for 2 minutes. Final pH is adjusted with acidity regulators to 3.6-3.9.

The products as described in example 5a and 5b were mixed in a ratio to obtain a composition according to the invention.

| Sample code | Oil level (wt%) | Amount loaded oil in total oil droplets | PGPR level | G'at 1 day storage (Pa) | G'at 1 week storage |
|---|---|---|---|---|---|
| Single emulsion (O2-W3) (comparative example) | 75.2 | 0 | 0.0% | 420 | 361 |
| 1/3 5a +2/3 5b | 59.8 | 33% | 0.3% | 391 | 380 |
| 4/9 5a + 5/9 5b | 54.7 | 43% | 0.4% | 401 | 427 |

## Claims

1. A food composition in the form of an emulsion comprising
• a continuous water (W2) phase which comprises
• a water-in-oil (W1-O1) emulsion which is emulsified in the continuous water phase (W2), wherein the water-in-oil emulsion comprises polyglycerol polyricinoleate (PGPR)
• oil droplets (02) without an internal water phase which are emulsified in the continuous water phase (W2),
• an oil-in-water emulsifier,
wherein the amount of water-in-oil emulsion droplets is from 10 to 55 wt%, based on the amount (wt) of water-in-oil emulsion droplets and of oil droplets without an internal water phase taken together.

2. Food composition according to claim 1, wherein the water-in-oil emulsion (W1-O1) emulsified in the continuous water phase (W2) comprises water (W1) in an amount of more than 30 wt%, preferably more than 40 wt%, even more preferably more than 45 wt%, based on the weight of the water-in-oil emulsion (W1-O1), and calculated as W1/(W1-O1)*100.

3. Food composition according to any one of the preceding claims, wherein the amount of water-in-oil emulsion droplets is from 15 to 50 wt%, more preferably of from 20 to 45 wt% based on the amount (wt) of water-in-oil emulsion droplets and of oil droplets without an internal water phase taken together.

4. Food composition according to any one of the preceding claims, wherein the amount of oil droplets without an internal water phase (02) is higher than 15 wt%, preferably higher than 20 wt%, even more preferably higher than 45 wt%, based on the weight of the food composition.

5. Food composition according to any one of the preceding claims, wherein the total amount of water-in-oil emulsion (W1-O1) droplets and oil droplets (02) without an internal water phase taken together is from 50 to 80 wt% based on the weight of the food product.

6. Food composition according to any one of the preceding claims, wherein the total level of PGPR is less than 0.9 wt%, preferably less than 0.8 wt%, more preferably less than 0.7 wt%, even more preferably less than 0.4 wt%, based on the weight of the food composition.

7. Food composition according to any one of the preceding claims, wherein the level of PGPR is less than 0.9 wt%, preferably less than 0.8 wt%, even more preferably less than 0.7 wt%, based on the weight of the total oil in the food composition.

8. Food composition according to any one of the preceding claims, wherein the composition comprises oil in an amount of between 40 and 72 wt%, preferably of from 45 to 70 wt%, even more preferably of from 50 to 68 wt%, even more preferably from 52 wt% to 65 wt%, based on the weight of the composition.

9. Food composition according to any one of the preceding claims, wherein the oil-in-water emulsifier comprises egg yolk.

10. Food composition according to any one of the preceding claims, wherein the pH is less than 4

11. Food composition according to any one of the preceding claims, wherein the composition has consistency expressed as storage modulus G' of between 100 and 3500 Pa at 20 °C.

12. A method to prepare a food composition in the form of an emulsion comprising a continuous water phase (W2), wherein the continuous water phase (W2) comprises water-in-oil (W1-O1) emulsion droplets which are emulsified in the continuous water phase (W2) and oil droplets (02) without an internal water phase which are emulsified in the continuous water phase (W2), wherein the amount of water-in-oil emulsion droplets is from 10 to 55 wt%, based on the amount (wt) of water-in-oil emulsion droplets and of oil droplets without an internal water phase taken together, the method comprising the steps of:
a) Providing a primary water-in-oil emulsion (W1-O1) by emulsifying water with oil and PGPR,
b) Either:
Emulsifying the primary emulsion resulting from step a) and oil successively (in any order) or simultaneously with water in the presence of an oil-in-water emulsifier,
or
i. Producing a water-in-oil-in-water emulsion by emulsifying the primary emulsion resulting from step a) with water in the presence of an oil-in-water emulsifier,
ii. Producing an oil-in-water emulsion by emulsifying oil with water in the presence of an oil-in-water emulsifier,
iii. Combining and mixing the emulsions resulting from step i and ii.

13. Method according to claim 12, wherein in step a) PGPR has been dissolved in the oil before emulsifying the oil with the water.

## Patentansprüche

1. Lebensmittelzusammensetzung in Form einer Emulsion, umfassend
• eine kontinuierliche Wasser (W2)-Phase, welche umfasst
• eine Wasser-in-ÖI (W1-O1)-Emulsion, die in einer kontinuierlichen Wasserphase (W2) emulgiert ist, wobei die Wasser-in-ÖI-Emulsion Polyglycerin-Polyricinoleat (PGPR) umfasst,
• Öltröpfchen (02) ohne interne Wasserphase, die in der kontinuierlichen Wasserphase (W2) emulgiert sind,
• einen Öl-in-Wasser-Emulgator,
wobei die Menge der Wasser-in-ÖI-Emulsionströpfchen 10 bis 55 Gew.-%, bezogen auf die Menge (Gew) der Wasser-in-ÖI-Emulsionströpfchen und der Öltröpfchen ohne interne Wasserphase zusammengenommen beträgt.

2. Lebensmittelzusammensetzung nach Anspruch 1, wobei die Wasser-in-ÖI-Emulsion (W1-O1), die in der kontinuierlichen Wasserphase (W2) emulgiert ist, Wasser (W1) in einer Menge von mehr als 30 Gew.-%, vorzugsweise von mehr als 40 Gew.-%, sogar bevorzugter von mehr als 45 Gew.-%, bezogen auf das Gewicht der Wasser-in-ÖI-Emulsion (W1-O1) und kalkuliert als W1/(W1-O1)●100, umfasst.

3. Lebensmittelzusammensetzung nach irgendeinem der vorhergehenden Ansprüche, wobei die Menge der Wasser-in-ÖI-Emulsionströpfchen 15 bis 50 Gew.-%, bevorzugter 20 bis 45 Gew.-%, bezogen auf die Menge (Gew) der Wasser-in-ÖI-Emulsionströpfchen und der Öltröpfchen ohne interne Wasserphase zusammengenommen, beträgt.

4. Lebensmittelzusammensetzung nach irgendeinem der vorhergehenden Ansprüche, wobei die Menge der Öltröpfchen ohne interne Wasserphase (02) höher als 15% Gew.-%, vorzugsweise höher als 20 Gew.-%, sogar bevorzugter höher als 45 Gew.-%, bezogen auf das Gewicht der Lebensmittelzusammensetzung, beträgt.

5. Lebensmittelzusammensetzung nach irgendeinem der vorhergehenden Ansprüche, wobei die Gesamtmenge der Wasser-in-Öl-Emulsions(W1-O1)-tröpfchen und der Öltröpfchen (02) ohne interne Wasserphase zusammengenommen 50 bis 80 Gew.-%, bezogen auf das Gewicht des Lebensmittelprodukts, beträgt.

6. Lebensmittelzusammensetzung nach irgendeinem der vorhergehenden Ansprüche, wobei die Gesamtmenge des PGPR weniger als 0,9 Gew.-%, vorzugsweise weniger als 0,8 Gew.-%, bevorzugter weniger als 0,7 Gew.-%, sogar bevorzugter weniger als 0,4 Gew.-%, bezogen auf das Gewicht der Lebensmittelzusammensetzung, beträgt.

7. Lebensmittelzusammensetzung nach irgendeinem der vorhergehenden Ansprüche, wobei der Gehalt des PGPR weniger als 0,9 Gew.-%, vorzugsweise weniger als 0,8 Gew.-%, sogar bevorzugter weniger als 0,7 Gew.-%, bezogen auf das Gewicht des gesamten Öls in der Lebensmittelzusammensetzung, beträgt.

8. Lebensmittelzusammensetzung nach irgendeinem der vorhergehenden Ansprüche, wobei die Zusammensetzung Öl in einer Menge zwischen 40 und 72 Gew.-%, vorzugsweise von 45 bis 70 Gew.-%, sogar bevorzugter von 50 bis 68 Gew.-%, sogar bevorzugter von 52 bis 65 Gew.-%, bezogen auf das Gewicht der Zusammensetzung, umfasst.

9. Lebensmittelzusammensetzung nach irgendeinem der vorhergehenden Ansprüche, wobei der Öl-in-Wasser-Emulgator Eigelb umfasst.

10. Lebensmittelzusammensetzung nach irgendeinem der vorhergehenden Ansprüche, wobei der pH weniger als 4 ist.

11. Lebensmittelzusammensetzung nach irgendeinem der vorhergehenden Ansprüche, wobei die Zusammensetzung eine Konsistenz, ausgedrückt als Speichermodul G' zwischen 100 und 3500 Pa bei 20°C aufweist.

12. Verfahren zur Herstellung einer Lebensmittelzusammensetzung in Form einer Emulsion, umfassend eine kontinuierliche Wasserphase (W2), wobei die kontinuierliche Wasserphase (W2) umfasst Wasser-in-ÖI (W1-O1)-Emulsionströpfchen, die in der kontinuierlichen Wasserphase (W2) emulgiert sind, und Öltröpfchen (02) ohne interne Wasserphase, die in der kontinuierlichen Wasserphase (W2) emulgiert sind, wobei die Menge der Wasser-in-ÖI-Emulsionströpfchen 10 bis 55 Gew.-%, bezogen auf die Menge (Gew) der Wasser-in-ÖI-Emulsionströpfchen und der Öltröpfchen ohne interne Wasserphase zusammengenommen, beträgt, wobei das Verfahren die Schritte umfasst:
a) Bereitstellen einer primären Wasser-in-ÖI-Emulsion (W1-O1) durch Emulgieren von Wasser mit Öl und PGPR,
b) entweder:
Emulgieren der primären Emulsion, die aus dem Schritt a) resultiert, und Öl nacheinander (in beliebiger Folge) oder gleichzeitig mit Wasser in Gegenwart eines Öl-in-Wasser-Emulgators,
oder
i. Herstellen einer Wasser-in-Öl-in-Wasser-Emulsion durch Emulgieren der Primäremulsion, die aus dem Schritt a) resultiert, mit Wasser in Gegenwart eines Öl-in-Wasser-Emulgators,
ii. Herstellen einer Öl-in-Wasser-Emulsion durch Emulgieren von Öl mit Wasser in der Gegenwart eines Öl-in-Wasser-Emulgators,
iii. Kombinieren und Mischen der aus dem Schritt i und ii resultierenden Emulsionen.

13. Verfahren nach Anspruch 12, wobei im Schritt a) PGPR in dem Öl gelöst wurde, bevor das Öl mit dem Wasser emulgiert wurde.

## Revendications

1. Composition alimentaire dans la forme d'une émulsion comprenant
• une phase d'eau continue (W2) qui comprend
• une émulsion eau-dans-huile (W1-O1) qui est émulsifiée dans la phase d'eau continue (W2), où l'émulsion eau-dans-huile comprend du polyricinoléate de polyglycérol (PGPR)
• des gouttelettes d'huile (O2) sans une phase d'eau interne qui sont émulsifiées dans la phase d'eau continue (W2),
• un émulsifiant huile-dans-eau,
où la quantité de gouttelettes d'émulsion eau-dans-huile est de 10 à 55 % en masse, sur la base de la quantité (masse) de gouttelettes d'émulsion eau-dans-huile et de gouttelettes d'huile sans une phase d'eau interne prises ensemble.

2. Composition alimentaire selon la revendication 1, dans laquelle l'émulsion eau-dans-huile (W1-O1) émulsifiée dans la phase d'eau continue (W2) comprend de l'eau (W1) dans une quantité supérieure à 30 % en masse, de préférence supérieure à 40 % en masse, encore mieux supérieure à 45 % en masse, sur la base de la masse de l'émulsion eau-dans-huile (W1-O1), et calculée comme W1/(W1-O1)^{∗}100.

3. Composition alimentaire selon l'une quelconque des revendications précédentes, où la quantité de gouttelettes d'émulsion eau-dans-huile est de 15 à 50 % en masse, encore mieux de 20 à 45 % en masse sur la base de la quantité (masse) de gouttelettes d'émulsion eau-dans-huile et de gouttelettes d'huile sans une phase d'eau interne prises ensemble.

4. Composition alimentaire selon l'une quelconque des revendications précédentes, où la quantité de gouttelettes d'huile sans une phase d'eau interne (O2) est supérieure à 15 % en masse, de préférence supérieure à 20 % en masse, bien mieux encore supérieure à 45 % en masse, sur la base de la masse de la composition alimentaire.

5. Composition alimentaire selon l'une quelconque des revendications précédentes, où la quantité totale de gouttelettes d'émulsion eau-dans-huile (W1-O1) et gouttelettes d'huile (O2) sans une phase d'eau interne prises ensemble est de 50 à 80 % en masse sur la base de la masse du produit alimentaire.

6. Composition alimentaire selon l'une quelconque des revendications précédentes, où la teneur totale en PGPR est inférieure à 0,9 % en masse, de préférence inférieure à 0,8 % en masse, encore mieux inférieure à 0,7 % en masse, bien mieux encore inférieure à 0,4 % en masse, sur la base de la masse de la composition alimentaire.

7. Composition alimentaire selon l'une quelconque des revendications précédentes, où la teneur en PGPR est inférieure à 0,9 % en masse, de préférence inférieure à 0,8 % en masse, bien mieux encore inférieure à 0,7 % en masse, sur la base de la masse de l'huile totale dans la composition alimentaire.

8. Composition alimentaire selon l'une quelconque des revendications précédentes, où la composition comprend de l'huile dans une quantité de 40 à 72 % en masse, de préférence de 45 à 70 % en masse, encore mieux de 50 à 68 % en masse, bien mieux encore de 52 % en masse à 65 % en masse, sur la base de la masse de la composition.

9. Composition alimentaire selon l'une quelconque des revendications précédentes, où l'émulsifiant huile-dans-eau comprend du jaune d'œuf.

10. Composition alimentaire selon l'une quelconque des revendications précédentes, où le pH est inférieur à 4.

11. Composition alimentaire selon l'une quelconque des revendications précédentes, où la composition présente une consistance exprimée comme module de stockage G' de 100 à 3 500 Pa à 20°C.

12. Procédé de préparation d'une composition alimentaire dans la forme d'une émulsion comprenant une phase d'eau continue (W2), où la phase d'eau continue (W2) comprend des gouttelettes d'émulsion eau-dans-huile (W1-O1) qui sont émulsifiées dans la phase d'eau continue (W2) et des gouttelettes d'huile (O2) sans une phase d'eau interne qui sont émulsifiées dans la phase d'eau continue (W2), où la quantité de gouttelettes d'émulsion eau-dans-huile est de 10 à 55 % en masse, sur la base de la quantité (masse) de gouttelettes d'émulsion eau-dans-huile et de gouttelettes d'huile sans une phase d'eau interne prises ensemble, le procédé comprenant les étapes de :
a) fourniture d'une émulsion eau-dans-huile primaire (W1-O1) par émulsification d'eau avec de l'huile et PGPR,
b) soit :
émulsification de l'émulsion primaire résultant de l'étape a) et de l'huile successivement (dans un ordre quelconque) ou simultanément avec de l'eau en présence d'un émulsifiant huile-dans-eau,
soit
i. production d'une émulsion eau-dans-huile par émulsification de l'émulsion primaire résultant de l'étape a) avec de l'eau en présence d'un émulsifiant huile-dans-eau,
ii. production d'une émulsion huile-dans-eau par émulsification d'huile avec de l'eau en présence d'un émulsifiant huile-dans-eau,
iii. combinaison et mélange des émulsions résultant de l'étape i et ii.

13. Procédé selon la revendication 12, où dans l'étape a) PGPR a été dissous dans l'huile avant émulsification de l'huile avec l'eau.
